Europäisches Patentamt

European Patent Office

Office européen des brevets

(19)

(11) Publication number: **0 244 745**
**A2**

# EUROPEAN PATENT APPLICATION

(21) Application number: **87106202.2**

(22) Date of filing: **29.04.87**

(51) Int. Cl.⁴: **G 01 G 19/12**

(30) Priority: **06.05.86 IT 1247486**

(43) Date of publication of application: **11.11.87**
**Bulletin 87/46**

(84) Designated Contracting States: **DE FR GB SE**

(71) Applicant: **Cini, Giancarlo, Via D. Chiesa 18,
I-41051 Castelnuovo Rangone (IT)**
Applicant: **Plessi, Atus, Via A. Ferrari 14,
I-41051 Castelnuovo Rangone (IT)**
Applicant: **Soli, Enza, Via Tassoni 68, I-41056 Savignano
sul Panaro (IT)**

(72) Inventor: **Cini, Giancarlo, Via D. Chiesa 18,
I-41051 Castelnuovo Rangone (IT)**
Inventor: **Plessi, Atus, Via A. Ferrari 14,
I-41051 Castelnuovo Rangone (IT)**
Inventor: **Soli, Enza, Via Tassoni 68, I-41056 Savignano
sul Panaro (IT)**

(74) Representative: **Porsia, Bruno et al, c/o Succ. Ing.
Fischetti & Weber Via Caffaro 3/2, I-16124 Genova (IT)**

(54) **Device to be mounted in autovehicles for determining at any time the weight of the carried loads.**

(57) Between the load-carrying structure or platform (P) and the underlying supporting frame (T) of any autovehicle there are disposed load transducers (4) which, under command, may be pushed against the platform (P) while it is temporarily disengaged from any vertical connection with said frame (T), so as to generate an electric signal having a value which is proportional to the weight of said platform (P) and the load supported thereof. The electric signal is processed in a control cabinet (5) which is provided with the controls for activating and disactivating the load transducers (4) and with displays (15, 16, 17) for directly showing the weight and the date of weighing and which is equipped, preferably, with a small printing unit (24).

CINI, Giancarlo

PLESSI, Atus

SOLI, Enza

"Device to be mounted in autovehicles
for determining at any time the
weight of the carried load."

In order to ascertain the weight of the load being transported by any autovehicle, it is presently necessary to use weighbridges, scales or other devices which are not always available and near to the place where the autovehicle is loaded, which, therefore, entails serious problems, also due to the necessity to ascertain the tare of said autovehicle. The invention provides a device which is easily constructed, is of relatively limited cost and of high reliability, which may be mounted in any autovehicle and permits to ascertain quickly and at any moment the empty weight and the gross weight of said autovehicles, and which is equipped, preferably, with a small alphanumeric printing unit capable of printing the decoded values of the tare, gross weight and net weight, and the date when the weighing operation has been effected. The importance of the present invention is apparent in the prevention of road accidents and sanctions to be applied when an autovehicle is running in overload conditions. When applied on vehicles handling palletized loads, such as fork-lift trucks, the device according to the invention permits to achieve such speeds and reductions of the weighing costs that could not be achieved otherwise.

The device according to the invention comprises load transducers, so-called load-cells, which are suitably arranged and distributed between the load-carrying structure or platform and the underlying supporting frame or chassis, and which usually do not bear the weight of either the platform and load arranged on the latter. When desired, the load-cells may be urged either directly or indirectly against the platform, which is temporarily disengaged from the rigid connection with the underlying frame so as to be slightly movable upwards. The electric signals generated by the load cells have a value which is directly proportional to the weight of the platform and the load thereon, and are processed by a control cabinet with microprocessor, provided with the required controls and with a display unit and a printing unit for visualizing and printing the various data that have been detected. Advantageously, said control cabinet may be arranged in proximity of the driver's seat on the autovehicle and/or it may be of the mobile type, for example, to be used by personnel in charge of the supervision of vehicular traffic.

These and other characteristics of the invention and the advantages resulting therefrom will be apparent from the following description of a preferred embodiment, shown as a non-limiting example in the accompanying drawing: wherein:

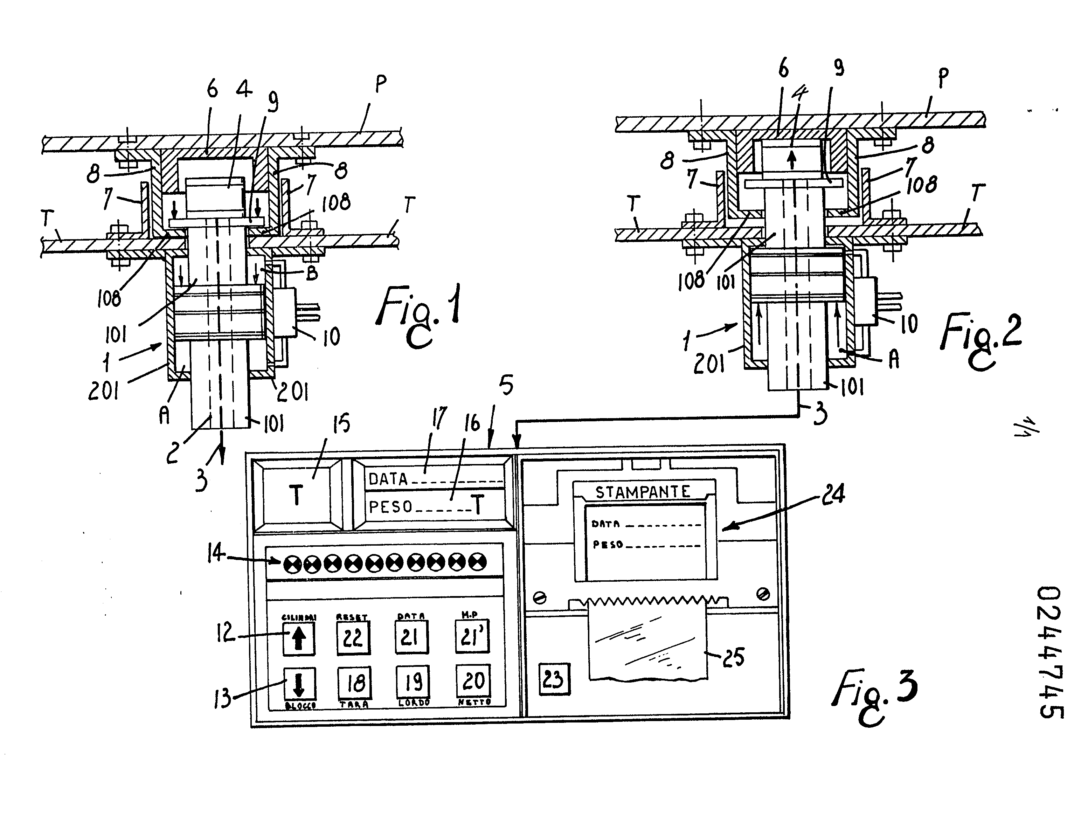

ПУаFigures 1 and 2 are vertical sectional views of one of the weighing devices associated with the autovehicle, in the rest position (figure 1) and in the weighing position (figure 2).

Figure 3 is a front elevational view of the electronic control cabinet and printer for processing and displaying the electric signals generated by the weighing devices.

In figure 1, P indicates the load-carrying structure or platform of an autovehicle, and T indicates the supporting frame, to which said platform is usually connected. Between the parts P and T there are disposed and distributed, in a suitable number and in the proper positions, means of any type that, under command, cause an upward movement of the platform P which, for this purpose, is associated with the supporting frame T so as to be movable upwards therfrom. According to a possible, though not alone, embodiment of the invention, said lifting means are associated structurally with the frame T and comprise fluid-operated cylinder-and-piston units, preferably hydraulic jacks 1, including a stem 101 protruding from both ends of the body 201 of said jack and formed with an axial bore 2 to allow the passage of electrical cables 3 connecting the load-cell 4, arranged on top of the stem 101, to a control cabinet 5 (figure 3). The stem 101 of said jacks is normal to the platform P, and the latter is provided, in front of said cells 4, with strengthening inserts 6 co-operating with said load-cells 4. Guide members 7 and 8 are secured to the frame T and platform P, respectively, to prevent the latter parts from displacing relatively horizontally, though permitting, if necessary, relative vertical displacements.

According to the solution illustrated in figure 1, the guide member 8 associated with the platform P may be provided with wings 108 disposed below a collar 9 integral with the upper portion of the stem 101? the arrangement being such that by pressurizing the upper chamber B of the jacks 1, said parts 9 and 108 will interfere with each other, and the platform will be positively held assembled with the frame T. The numeral 10 indicates a check valve permitting the double-acting operation of the jacks 1 and ensuring the maintaining of the required pressure therein, even in case of breakage of the pipes feeding the pressurized liquid to said check valves. In the rest condition, as shown in figure 1, the load-cell 4 is suitably spaced from the part 6 of the platform P.

In contrast with the embodiment shown and described, the task of locking the platform P to the frame T may be fulfilled by specific means other than the lifting device 1, particularly when the platform P is of the tipping or roll-over type. The guide means 7 and 8 may also be other than those illustrated.

When the feeding to the jacks 1 is inverted, i.e. when the pressurized liquid is delivered into the lever chambers A thereof, the stems 101 will be moved upwards as from figure 2, whereby the part 9 will be spaced away from the part 108, thus permitting the consequential lifting of the platform P from the frame T due to the pushing action of the load-cells 4 against the part 6. In these conditions, the cells 4 generate an electric signal having a value which is proportional to the pressure thereon, i.e. proportional to the weight of the platform P and the load thereon.

Said devices are distributed between the parts P and T in such a number and positioning to avoid undesired distortions of said parts during their operation.

With reference to figure 3, the numeral 5 indicates a control cabinet which is operatively connected to the devices of figures 1 and 2, and which may be advantageously arranged within the driver's cabin. The control cabinet 5 comprises controls 12-13 for raising and lowering the stems of the jacks 1, respectively, and also comprises visual indicators 14, in the number of at least one for each unit 1, by means of which the user may become acquainted when said jacks reach both limit positions thereof. Arranged in the control cabinet 5 is a microprocessor which is operatively connected to the load-cells 4 and which processes the electrical signal generated by said cells and visualizes the processed data by means of display units and a printer unit. More particularly, 15 and 16 designate the display units showing the detected weight, and 17 designates a display unit connected to an electronic watch and showing the date. The numeral 18 designates a pushbutton for pre-setting said micro-processor to ascertain the tare of the parts weighing on the cells 4 apart from the carried load, while the numerals 19 and 20 designate further pushbuttons for pre-setting the processor to ascertain the gross weight and the net weight, respectively. The numerals 21 and 21' designate keys for controlling the portion of the processor intended to display the date, and 22 designates a key for resetting the processor after each weighing operation. All the data processed by the control cabinet 5 are visualized by the various displays and, by means of a pushbutton 23, they may be transferred to a small printer 24 which will print them on one or more superimposed webs 25.

The device according to the invention comprises, of course, safety provisions which are not illustrated in detail herein, in that they may be perceived and constructed easily by those skilled in the art, and which permit said device to be operative only when the autovehicle is stopped and when the platform P is in a sufficiently horizontal position.

When the devices of the figures 1 and 2 are installed on a trailer, they may be connected to the control cabinet 5 on the tractor through a switch or selector, or they may be connected to a socket adapted for connection to a control cabinet 5 of the mobile type. The jacks 1 may also be adapted for connection to a hydraulic control cabinet which may be the one which is normally installed on the autovehicle. The devices installed on the tractor section of the autovehicle may also be adapted for a disconnectible connection with the control cabinet of figure 3 and, if desired, also with the hydraulic control cabinet for the jacks 1, or they may be provided with shunt sockets so that, for example, police or control officials may connect their control cabinets to the terminals of said weighing devices.

The device according to the invention may be applied as well to fork-lift trucks for handling palletized loads. The load-cells 4 may be disposed otherwise than illustrated, for example, by being interposed between the body 201 of the jack 1 and the frame T, so as to be fixed.

## CLAIMS

1. A device adapted to be associated with any autovehicle to detect at any moment the weight of the load being carried, characterized in that it comprises:

- means connecting the load-carrying platform (P) of said autovehicle to the underlying supporting frame (T), to ensure a positive connection between these two portions and to permit, when desired, said platform to be lifted sufficiently with respect to said frame;

- lifting means (1) mounted in the right number and the proper positions between the platform (P) and frame (T), each said means having associated therewith a load transducer (4) which when displaced by said means is loaded by the weight of said platform (P) and the load possibly carried thereon and generates an electric signal which is proportional to said weight;

- an electronic control cabinet (5) operatively connected or connectible to the transducers (4) and lifting means and comprising controls (12-13) to either activate or disactivate the lifting means, indicators (14) to signal the operation of the lifting means, microprocessors, displays (15-16) and further controls (18-19-20) through which the data concerning the weight detected by the load transducers may be processed and visualized, while said control cabinet (5) may be associated with a small printer (24) for printing the data processed by said microprocessors.

2. A device according to claim 1, characterized in that said control and detection cabinet (5) is associated additionally with an electronic watch with a date display (17), all associated operatively also with said printer (24) of said device.

3. A device according to claims 1 and 2, characterized in that the lifting means (1) comprises hydraulic jacks, and the load-cell (4) is mounted on the upper end of the stem (101) of each jack, said stem, preferably, protruding from both ends of the body (201) of each assembly and having an axial bore permitting the electrical cables (3) that connect the load-cell (4) to the control and processing cabinet (5) to pass through said stem.

4. A device according to .claims 1 to 3, characterized in that the lifting means (1) are so constructed as to operate actively as well during the retraction stroke to connect positively said load-carrying platform (P) to the underlying frame (T) after each weighing operation.

5. A device according to the claims 1 to 4, characterized in that each load-cell (4) may be of annular configuration and may be interposed between the body (201) of the jack and its supporting structure (T), so as to be fixed.

Fig.1

Fig.2

Fig.3